# EUROPEAN PATENT APPLICATION

(11) **EP 4 822 092 A1**
(43) Date of publication of application: **14.10.2026**
(21) Application number: 24900190.0
(22) Date of filing: 02.07.2024
(51) Int. Cl.: E02B 3/26, B63B 59/02

(54) **PNEUMATIC FENDER MANAGEMENT SYSTEM AND METHOD**

(30) Priority: 05.12.2023 JP 2023205287
(71) Applicant: The Yokohama Rubber Co., Ltd., Hiratsuka-shi, Kanagawa 254-8601 (JP)
(72) Inventor: ISHIBASHI, Yusuke, Hiratsuka-shi, Kanagawa 254-8601 (JP)
(74) Representative: Grünecker Patent- und Rechtsanwälte PartG mbB
(86) International application number: PCT/JP2024/023932
(87) International publication number: WO 2025/120890

(57) **Abstract**

Provided is a pneumatic fender management system and method which can more effectively use a fender by suppressing uneven wear of a fender in a specified range caused by contact by a watercraft. A pneumatic fender (11A) is installed at a quay wall (10) with its rotation around a cylinder center line CL being regulated. Passive IC tags (2) are installed facing each other at intervals in a circumferential direction of a fender body (12). A communication unit (7) configured to establish wireless communication with each of the passive IC tags (2) is disposed outside the pneumatic fender(11A). Identification information of each of the passive IC tags (2), a circumferential installation position of each of the passive IC tags (2) in the fender body (12), and a circumferential placement position of each of the passive IC tags (2) at the quay wall (10) are defined as preliminary information. Based on the identification information of the passive IC tag (2) acquired by the communication unit (7) using wireless communication, the circumferential placement position of the passive IC tag (2) at the quay wall (10) when the identification information is acquired, and the preliminary information, a position fixation period of the fender body (12) in the circumferential direction at the quay wall (10) is specified by a computation device (8).

## Description

### Technical Field

The present invention relates to a pneumatic fender management system and method and particularly relates to pneumatic fender management system and method which can more effectively use a fender by suppressing uneven wear of a fender in a specific range caused by contact by a watercraft.

### Background Art

As the pneumatic fender, there is a vertical pneumatic fender used with a weight connected to a lower side thereof (e.g., see Patent Document 1). The vertical pneumatic fender is often installed at a place of use such as a quay wall with rotation of a cylindrical fender body around a cylinder center line being regulated. In the fender installed in this manner, the watercraft repeatedly comes into contact with the same range of the fender body, making the fender body worn.

Accordingly, unless the fender body is repositioned by appropriately shifting it in a circumferential direction around the cylinder center line, a specific range of the fender body in the circumferential direction is significantly worn. When the specific range of the fender body is significantly worn despite the majority thereof remaining unworn, the fender needs to be replaced, leading to a problem that the fender cannot be used effectively. In a so-called horizontal pneumatic fender, the fender body may also be installed with rotation of the fender body around the cylinder center line being regulated, causing the same problem as described above. Thus, there is room for improvement to more effectively use the fender by suppressing the uneven wear on the fender in the specific range caused by contact by the watercraft.

### Citation List

### Patent Literature

Patent Document 1: JP H11-117261 A

### Summary of Invention

### Technical Problem

An object of the present invention is to provide a pneumatic fender management system and method which can more effectively use a fender by suppressing uneven wear of the fender in a specific range caused by contact by a watercraft.

### Solution to Problem

To achieve the object described above, a pneumatic fender management system according to an embodiment of the present invention is a pneumatic fender management system in which a pneumatic fender has a fender body to which bowl-shaped end portions are connected adjacent to both sides of a cylindrical body portion in a cylinder axial direction, rotation of the pneumatic fender around a cylinder center line is regulated, and a state of the pneumatic fender installed at a place of use is determined. The pneumatic fender management system includes: passive IC tags installed facing each other at intervals in a circumferential direction of a fender body; a communication unit disposed outside the pneumatic fender and configured to establish wireless communication with each of the passive IC tags; and a computation device, wherein identification information of each of the passive IC tags, a circumferential installation position of each of the passive IC tags in the fender body, and a circumferential placement position of each of the passive IC tags at the place of use being defined as preliminary information. Based on the identification information of at least one of the passive IC tags acquired by the communication unit using wireless communication, the circumferential placement position of the at least one passive IC tag at the place of use when the identification information is acquired, and the preliminary information, a position fixation period of the fender body in the circumferential direction at the place of use is specified by a computation device.

A pneumatic fender management method according to an embodiment of the present invention is a pneumatic fender management method in which a pneumatic fender has a fender body to which bowl-shaped end portions are connected adjacent to both sides of a cylindrical body portion in a cylinder axial direction, rotation of the pneumatic fender around a cylinder center line is regulated, and a state of the pneumatic fender installed at a place of use is determined. The pneumatic fender management method includes: installing passive IC tags facing each other at intervals in a circumferential direction of the fender body; installing, outside the pneumatic fender, a communication unit configured to establish wireless communication with each of the passive IC tags; defining, as preliminary information, identification information of each of the passive IC tags, a circumferential installation position of each of the passive IC tags in the fender body, and a circumferential placement position of each of the passive IC tags at the place of use; and based on the identification information of at least one of the passive IC tags acquired by the communication unit using wireless communication, the circumferential placement position of the at least one passive IC tag at the place of use when the identification information is acquired, and the preliminary information, specifying, by a computation device, a position fixation period of the fender body in the circumferential direction at the place of use.

### Advantageous Effects of Invention

In an embodiment of the present invention, based on the identification information of at least one IC tag acquired by the communication unit by wireless communication, the circumferential installation position of the at least one IC tag at the place of use when the identification information is acquired, and the preliminary information, the period (the position fixation period) during which the fender body is installed at the place of use without changing its circumferential position is specified by the computation device. Therefore, by using the specified position fixation period as an index, the fender body can be shifted circumferentially around the cylinder center line, and the pneumatic fender can be timely reinstalled at the place of use. As a result, the uneven wear of the pneumatic fender in the specific range caused by contact by the watercraft is suppressed, which is advantageous in more effectively using the pneumatic fender.

### Brief Description of Drawings

FIG. 1 is an explanatory diagram illustrating an embodiment of a pneumatic fender management system in a top view when applied to a vertical pneumatic fender.
FIG. 2 is a partially enlarged diagram of FIG. 1.
FIG. 3 is an explanatory diagram illustrating the vertical pneumatic fender of FIG. 2 in a side view.
FIG. 4 is a bottom view illustrating a vertical cross-section of the inner portion of the vertical pneumatic fender of FIG. 3.
FIG. 5 is an explanatory diagram illustrating a plan view of an IC tag of FIG. 4.
FIG. 6 is an explanatory diagram illustrating the IC tag of FIG. 5 in a front view.
FIG. 7 is an explanatory diagram illustrating a state in which wireless communication is established between the IC tag and a communication unit of FIG. 4 in an enlarged manner.
FIG. 8 is an explanatory diagram illustrating the vertical pneumatic fender in which the fender body of FIG. 2 is shifted in the circumferential direction and repositioned at the place of use.
FIG. 9 is an explanatory diagram illustrating a configuration of a management system in which a computation device and terminal devices are connected through a communication network.
FIG. 10 is an explanatory diagram illustrating an embodiment of a management system in a top view when applied to a horizontal pneumatic fender.
FIG. 11 is an explanatory diagram illustrating the pneumatic fender of FIG. 10 in a side view.

### Description of Embodiments

A pneumatic fender management system and method according to an embodiment of the present invention will be described below according to an embodiment illustrated in the drawings.

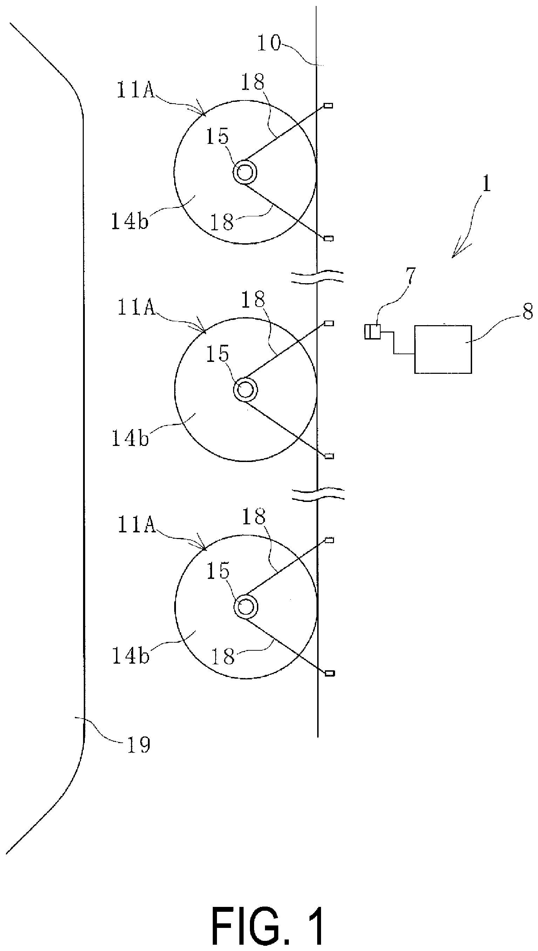

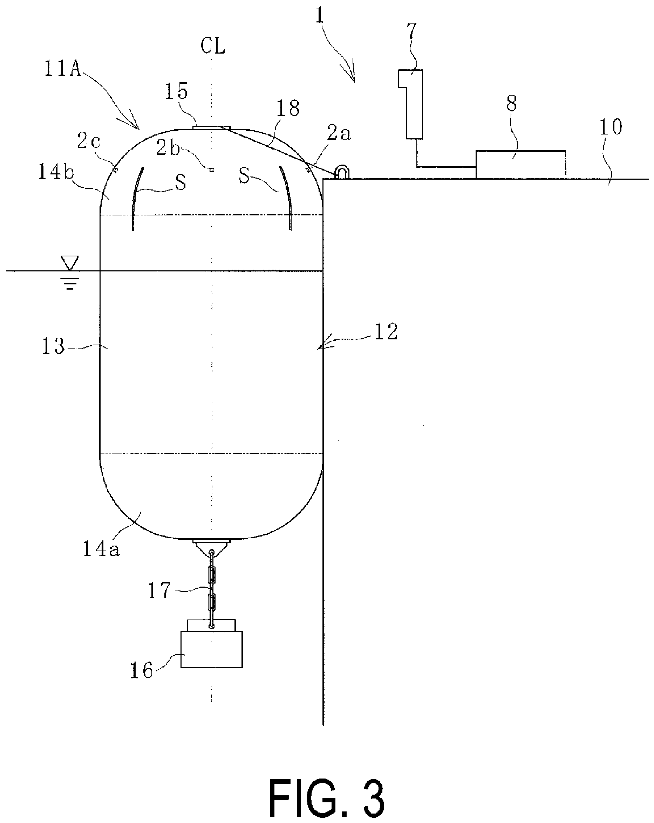

An embodiment of the pneumatic fender management system 1 illustrated in FIGS. 1 to 4 is used to determine the state of a pneumatic fender 11A at a quay wall 10 which is a place of use. In this embodiment, a management target is a vertical pneumatic fender 11A (hereinafter referred to as a fender 11A).

The management system 1 includes passive IC tags 2 (2a, 2b, 2c, and 2d) installed on the fender 11A, a communication unit 7, and a computation device 8. The communication unit 7 is disposed outside the fender 11A and performs wireless communication with the respective IC tags 2. The communication unit 7 and the computation device 8 are communicably connected by wire or wirelessly.

The fender 11A has a fender body 12 to which bowl-shaped end portions 14a and 14b are connected adjacent to both sides of a cylindrical body portion 13 in a cylinder axial direction. A weight 16 is connected to one bowl-shaped end portion 14a via a chain 17. The other bowl-shaped end portion 14b has a mouthpiece portion 15 at which valves are installed. The two-dot chain lines in the diagram represent boundary lines between the body portion 13 and the bowl-shaped end portions 14a and 14b, but actual boundary lines are not in the fender body 12. A dot-dash line CL in the diagram represents a cylinder center line of the body portion 13 (fender 11A). The cylinder center line CL extends through the cross-sectional center of the body portion 13 and the respective bowl-shaped end portions 14a and 14b. The direction in which the cylinder center line CL extends is the cylinder axial direction.

Describing the structure of the fender body 12 in detail, the body portion 13 is formed by layering a plurality of reinforcing layers between inner layer rubber and outer layer rubber. Each of the reinforcing layers is a cord layer formed by arranging a number of cords in parallel. The body portion 13 has a bias structure in which the cords of the reinforcing layers, which are layered and arranged adjacent to each other, are intersecting, and each cord is arranged at a predetermined cord angle with respect to the cylinder center line CL.

The bowl-shaped end portions 14a and 14b are each formed by layering a plurality of reinforcing layers between the inner layer rubber and the outer layer rubber. The plurality of reinforcing layers are formed by alternately layering the reinforcing layers made of cords extending radially from the bowl apex of the bowl-shaped end portions 14a and 14b, and the reinforcing layers made of cords extending in the circumferential direction, whereby the bowl-shaped end portions 14a and 14b have a so-called radial structure. The specification of the cords of the bowl-shaped end portions 14a and 14b are basically identical to the cords of the reinforcing layers of the body portion 13.

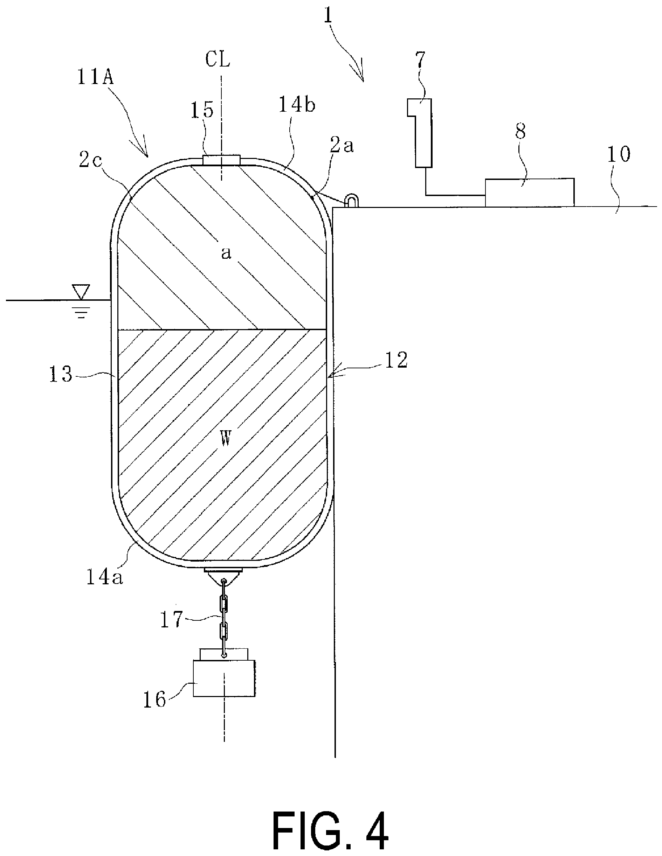

As illustrated in FIG. 4, the fender body 12 stores air a and a predetermined amount of ballast water W in an internal space thereof. A regulated internal pressure of the internal space of the fender body 12 during use is, for example, approximately 50 kPa or more and 100 kPa or less. The ballast water W and the weight 16 apply a vertically downward force to the fender body 12, and this vertically downward force and a buoyancy acting on the fender body 12 are balanced to achieve a state in which one bowl-shaped end portion 14a is the lower end portion of the fender body 12, while the other bowl-shaped end portion 14b is the upper end portion of the fender body 12.

A plurality of fenders 11A are disposed at intervals at the quay wall 10 while maintaining the extension direction of the cylinder center line CL in the vertical direction. A plurality of fixing ropes 18, one end of which fixed to the quay wall 10, are connected to the mouthpiece portion 15 of each fender 11A. Each fender 11A is installed at the quay wall 10 with its rotation about the cylinder center line CL being regulated. Accordingly, each fender 11A is fixed to the quay wall 10 with substantially no circumferential displacement around the cylinder center line CL. As illustrated in FIG. 1, a watercraft 19 approaches and touches respective fenders 11A that are anchored to the quay wall 10.

The IC tags 2 are installed at positions facing each other at intervals in the circumferential direction of the fender body 12. In this embodiment, four IC tags 2 are disposed at equal intervals (90 degrees) in the circumferential direction around the cylinder center line CL on the upper bowl-shaped end portion 14b. Each IC tag 2 is disposed at a position on the water. The number of the IC tags 2 is not limited to four, and, for example, two IC tags 2 may be disposed at equal intervals (180 degrees) in the circumferential direction.

An indicator S representing a circumferential position at which each IC tag 2 is disposed is attached to an outer surface of the fender body 12. In this embodiment, four indicators S extending in the vertical direction are provided on the upper bowl-shaped end portion 14b at positions in the circumferential direction at equal intervals (90 degrees) around the cylinder center line CL. One IC tag 2 is disposed in a range between respective indicators S adjacent to each other in the circumferential direction. The indicators S can be formed by bonding rubber pieces (e.g., white rubber pieces) having a color different from the surface color (black) of the fender body 12, or can be formed by applying a coating material or the like.

More specifically, each of the indicators S extends from the vertically center portion of the upper bowl-shaped end portion 14b up to the upper end portion of the body portion 13. One IC tag 2 is disposed near the middle position of the circumferential interval of the respective indicators S adjacent to each other in the circumferential direction. Accordingly, the indicators S adjacent to each other in the circumferential direction represent that the IC tags 2 are disposed at circumferential positions between the indications S.

The indicators S may be in any form as long as the circumferential positions at which the IC tags 2 are disposed can be seen from the appearance of the fender 11A. For example, the indicators S may be attached to the outer surface of the fender body 12 at positions each corresponding to the circumferential position at which each IC tag 2 is disposed. The indicators S are preferably attached to at least the outer surface of the upper bowl-shaped end portion 14b to avoid abrasion from contact with the quay wall 10 or by the watercraft 19.

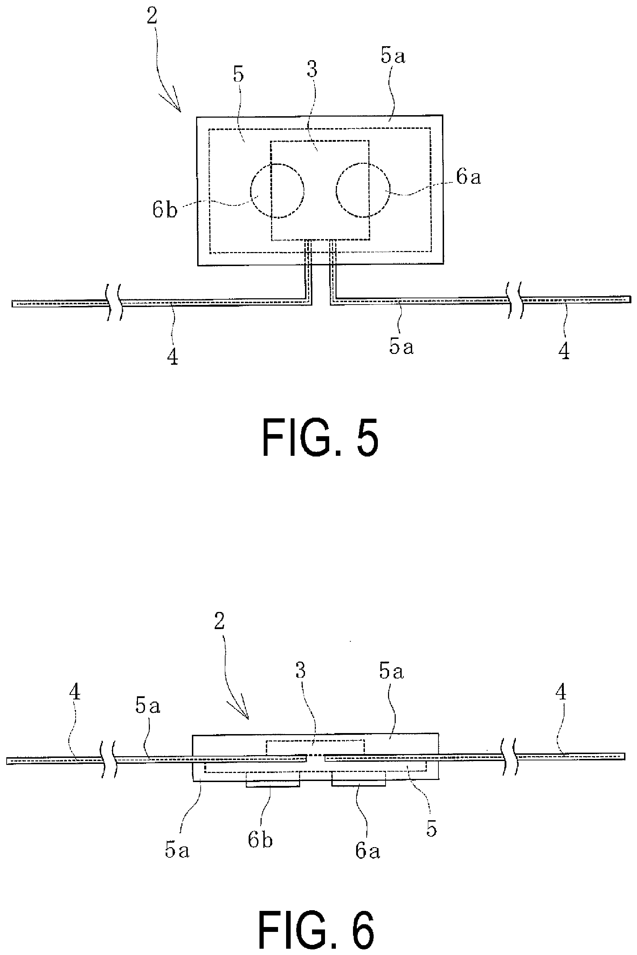

As illustrated in FIGS. 5 and 6, each IC tag 2 includes an IC chip 3 and an antenna unit 4 connected to the IC chip 3. In this embodiment, the IC tags 2 each has a pressure sensor 6a and a temperature sensor 6b in an integrated manner. The pressure sensor 6a and the temperature sensor 6b can be optionally provided in the IC tags 2. The fender 11A may not include both or either one of the pressure sensor 6a and the temperature sensor 6b. The pressure sensor 6a and the temperature sensor 6b may be provided independently and connected to the IC tag 2 when it does not have integrally provided the pressure sensor 6a and the temperature sensor 6b.

The size of the IC chip 3 is very small, for example, with a vertical dimension and a horizontal dimension of 50 mm or less (equivalent to an outer diameter of 50 mm or less) and a thickness of 5 mm or less. The size of the antenna unit 4 is also very small. In this embodiment, the antenna unit 4 adopted is a dipole type consisting of a metal monofilament extending left-right symmetrical manner from the IC chip 3. The length of each metal monofilament is approximately 10 mm or more and 200 mm or less.

The IC chip 3 optionally can store tag-specific information such as an identification numbers A of the IC tags 2 and other necessary information. For the IC tags 2, commonly distributed specifications are adopted, and for example, RFID tags can be used.

The IC chip 3 is disposed on a top surface of a substrate 5. The pressure sensor 6a and the temperature sensor 6b connected to the IC chip 3 are disposed on a bottom surface of the substrate 5. The antenna unit 4 (metal monofilament) protrudes and extends from the substrate 5. The antenna unit 4 is not limited to the dipole type described above, and various known types may be employed. For example, a ceramic antenna formed on the substrate 5 may be employed.

The IC tag 2 is covered with an insulating layer 5a, and the entire IC tag 2 is electrically insulated from the outside. However, detecting portions of the pressure sensor 6a and the temperature sensor 6b are not covered with the insulating layer 5a and are exposed from the top surface of the insulating layer 5a. As the insulating layer 5a, resin such as ABS, polyvinyl chloride, polycarbonate, polyimide, or epoxy can be used. To cover the long and extended antenna unit 4 (metal monofilament), polyvinyl chloride is highly suitable due to its excellent flexibility.

In this embodiment, the IC tags 2 are embedded in the inner layer rubber of the fender body 12. The IC tag 2 may also be attached by bonding it to the inner surface of the fender body 12 and covering its surface with a rubber member. In the IC tag 2 installed in the fender body 12, only the detecting portions of the pressure sensor 6a and temperature sensor 6b are exposed in the internal space of the fender 11A.

In the fender body 12, the bowl-shaped end portion 14b is less deformed and is less likely to receive an external force, and the IC tags 2 are preferably installed on the bowl-shaped end portion 14b. The dipole antenna unit 4 made of a metal monofilament has excellent bending durability. This is advantageous to avoid damage due to repeated deformation of the fender body 12.

The pressure sensor 6a detects the internal pressure of the fender 11A. As the pressure sensor 6a, various known types can be adopted as long as it can be attached to the IC tag 2. Detection data D1 detected by the pressure sensor 6a is transmitted from the IC tag 2 to the communication unit 7.

The temperature sensor 6b detects the temperature of the internal space of the fender 11A. As the temperature sensor 6b, various known types can be adopted as long as it can be attached to the IC tag 2. Detection data D2 detected by the temperature sensor 6b is transmitted to the communication unit 7 from the IC tag 2.

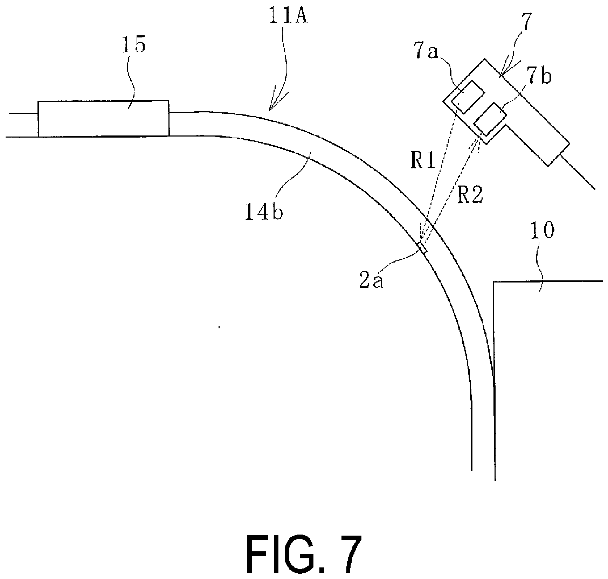

The communication unit 7 establishes wireless communication with each of the IC tags 2. More specifically, as illustrated in FIG. 7, the communication unit 7 includes a radio wave transmission unit 7a and a radio wave reception unit 7b. The radio wave transmission unit 7a transmits transmitting radio wave R1 to the IC tags 2. The transmitting radio wave R1 received by the antenna unit 4 generates power in the IC tags 2 and activates the IC tags 2. The activated IC tags 2 transmit returning radio wave R2 via the antenna unit 4 using this power, and this returning radio wave R2 is received by the radio wave reception unit 7b. In this manner, wireless communication is established between the IC tags 2 and the communication unit 7 by transmitting the returning radio wave R2 in response to the transmitting radio wave R1. By this wireless communication (returning radio wave R2), the identification information A, the detection data D1, D2, and the like are transmitted from the IC tags 2 to the communication unit 7 and acquired.

The communication unit 7 can employ commonly distributed specifications that enable wireless communication with passive IC tags (RFID tags) 2. Thus, the IC tags 2 and the communication unit 7 constitute a radio frequency identification (RFID) system. In this embodiment, the communication unit 7 of a portable hand-held type is used. Since the passive IC tags 2 are used, an upper limit of the communication distance between the IC tags 2 and the communication unit 7 is, for example, approximately one meter.

Identification information A and the detection data D1, D2 acquired by the communication unit 7 are input to the computation device 8. The computation device 8 performs various computational processing using the input data. A known computer or the like is used as the computation device 8. In this embodiment, the communication unit 7 and the computation device 8 are separately provided, but the communication unit 7 may be configured to have the function of the computation device 8, and the independent computation device 8 may be omitted.

An example of a procedure for determining the state of the fender 11A by using this embodiment of the management system 1 will be described below.

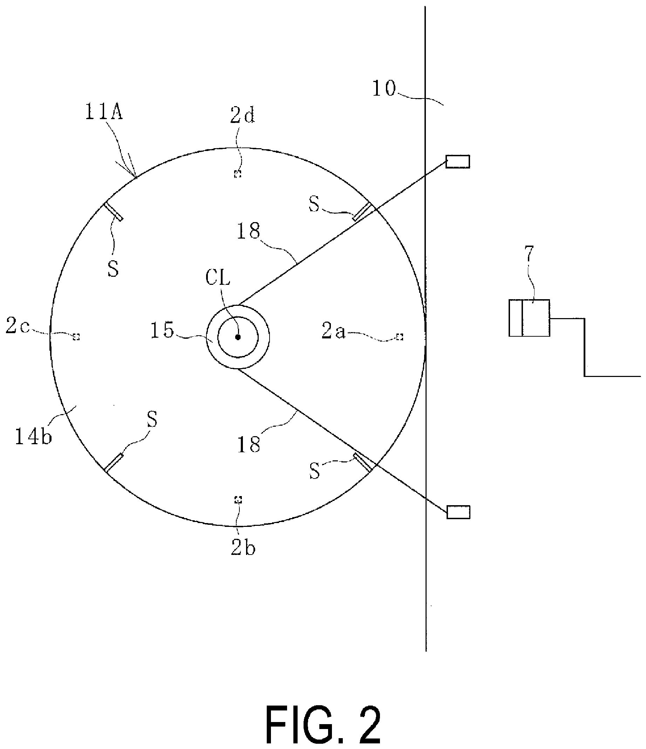

As illustrated in FIGS. 1 and 2, the fender 11A is installed at the quay wall 10 with its rotation around the cylinder center line CL being regulated. In this embodiment, the fender body 12 is disposed such that the side of the fender body 12 on which the IC tag 2a is disposed is in contact with the quay wall 10 in a top view illustrated in FIG. 2. In a top view, the side of the fender body 12 on which the IC tag 2c facing the IC tag 2a is disposed comes into contact with the watercraft 19 anchored to the quay wall 10.

First, as preliminary information, the identification information A of each IC tag 2, the circumferential placement position of each IC tag 2 in the fender body 12, and the circumferential installation position of each IC tag 2 at the quay wall 10 which is the place of use are determined and input to and stored in the computation device 8. In the fender 11A of FIG. 2, the identification information A of the IC tags 2a, 2b, 2c, and 2d is stored in the computation device 8. As the circumferential installation positions of the IC tags 2a, 2b, 2c, and 2d in the fender body 12, the IC tags 2a, 2b, 2c, and 2d are disposed at equal intervals (90 degrees) in the circumferential direction, and the position data indicating the degree of circumferential offset relative to the indicator S is stored in the computation device 8. For example, one indicator S is set as a reference, and the position information indicating the circumferential positions of the IC tags 2a, 2b, 2c, and 2d with respect to the reference indicator S is stored in the computation device 8. Using this position data, by visually observing the fender 11A and confirming reference indicators S, the circumferential placement positions of the IC tags 2a, 2b, 2c, and 2d in the fender body 12 can be determined.

Then, the circumferential placement positions of each IC tag 2a, 2b, 2c, and 2d relative to the quay wall 10 are determined when the fender 11A is installed at the quay wall 10. This circumferential placement position can be determined based on the circumferential placement positions of the IC tags 2a, 2b, 2c, and 2d in the fender body 12 and the position of the reference indicator S confirmed by visually observing the fender 11A, as described above. Specifically, in FIG. 2, the IC tag 2a is at the placement position adjacent to the quay wall 10, the IC tag 2c is at the placement position on the side opposite to the quay wall 10, the IC tag 2b is at the placement position located clockwise relative to the IC tag 2a between the IC tag 2a and the IC tag 2c, and the IC tag 2d is at the placement position located counterclockwise relative to the IC tag 2a between the IC tags 2a and 2c, then the circumferential placement positions of the respective IC tags 2a, 2b, 2c, and 2d at the quay wall 10 are stored in the computation device 8. Alternatively, with the fender 11A installed at the quay wall 10, the wireless communication is established between the communication unit 7 on the quay wall 10 and the IC tag 2 disposed adjacent to the quay wall 10, whereby the identification information A of the IC tag 2 is acquired. From the acquired identification information A, it is determined that the IC tag 2 located at the placement position adjacent to the quay wall 10 is the IC tag 2a. Since the circumferential placement positions of the IC tags 2 in the fender body 12 are determined, the circumferential placement positions of the other IC tags 2b, 2c, and 2d at the quay wall 10 can be determined.

After determining the preliminary information in advance as described above, a management operation to determine the state of the fender 11A is started. For each fender 11A, the wireless communication is established between the communication unit 7 on the quay wall 10 and the IC tag 2 located at the installation position adjacent to the quay wall 10 at regular intervals or upon expiration of each regular period, as illustrated in FIG. 7, the identification information A of the IC tag 2 is acquired, and the result is stored in the computation device 8. For example, the wireless communication is established every week or every month, and the IC tags 2 at the installation positions adjacent to the quay wall 10 are identified in time series for each fender 11A.

When there is no change in the identification information A obtained through this wireless communication, the position of the IC tag 2 located at the installation position adjacent to the quay wall 10 remains unchanged, whereby it can be determined that the fender body 12 of the fender 11A has been installed at the quay wall 10 without changing its circumferential position. Accordingly, the period during which the identification information A of the IC tag 2, acquired in time series, remains unchanged is identified by the computation device 8 as the period (position fixation period X) during which the fender body 12 is installed at the quay wall 10 without changing its circumferential position.

In the installation state of the fender 11A illustrated in FIG. 2, the watercraft 19 anchored to the quay wall 10 frequently comes into contact with the fender body 12 on the side on which the IC tag 2c is disposed, and therefore the contact portion is locally worn. When the position fixation period X is too long, wear on the contact surface increases significantly, and an upper limit for the position fixation period X needs to be set.

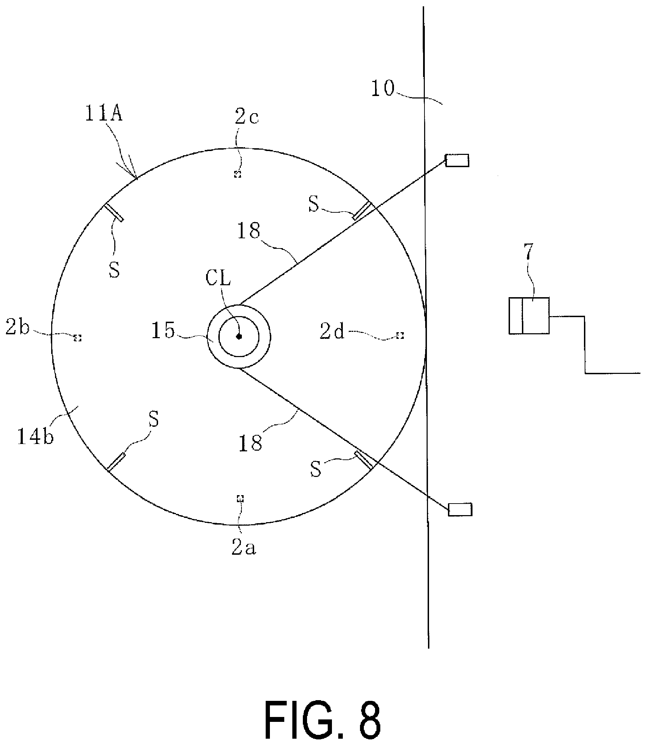

When the position fixation period X exceeds the upper limit, the fender body 12 is reinstalled at the quay wall 10 by shifting it circumferentially around the cylinder center line CL. This makes the fender 11A in the installation state as illustrated in FIG. 2 into the installation state illustrated in FIG. 8.

The fender 11A illustrated in FIG. 8 is repositioned by shifting the fender body 12 clockwise by 90 degrees around the cylinder center line CL from the installation state of FIG. 2. Since the indicators S are attached at 90 degree intervals on the outer surface of the upper bowl-shaped end portion 14b, the fender body 12 can be set at a position rotated clockwise by 90 degrees by reference to these indicators S.

When the fender 11A is repositioned at the quay wall 10 by shifting the fender body 12 in the circumferential direction around the cylinder center line CL, the repositioning is stored in the computation device 8. The circumferential installation positions of the respective IC tags 2 at the quay wall 10 are updated and stored in the computation device 8. Then, in this repositioned state, a new management operation for determining the state of the fender 11A is started. The new management operation is the same as the management operation in the case of the installation state of FIG. 2. Thereafter, by similarly rotating the fender body 12 clockwise by 90 degrees around the cylinder center line CL and repositioning the fender 11A, the fender 11A is used in a manner that the side of the fender body 12 on which the respective IC tags 2a, 2b, 2c, and 2d are installed is made to rotate and come into contact with the watercraft 19.

This management system 1 allows the fender body 12 to be shifted circumferentially around the cylinder center line CL and to be timely reinstalled at the quay wall 10 by using the specified position fixation period X as an index. This suppresses uneven wear of the fender 11A in the specific range caused by contact by the watercraft 19. As a result, it becomes possible to avoid situations where the fender 11A needs to be replaced because a portion thereof is significantly worn despite the majority of the fender body 12 being unworn, making it advantageous to use the fender 11A more effectively.

When the position fixation period X exceeds the upper limit value, the fender body 12 can be repositioned either by shifting it by 180 degrees circumferentially around the cylinder center line CL to reposition the fender 11A, or by shifting it 90 degrees counterclockwise to reposition the fender 11A. The circumferential offset amount and direction (clockwise, counterclockwise) of the fender body 12 around the cylinder center line CL can be set as appropriate, but to suppress the uneven wear on the fender body 12 caused by circumferential contact with the watercraft 19, the fender body 12 is rotated to be shifted circumferentially around the cylinder center line CL.

In this embodiment, each time the wireless communication is established between the IC tags 2 and the communication unit 7, the detection data D1, D2 from the pressure sensor 6a and temperature sensor 6b can also be acquired. That is, the internal pressure and the internal temperature of the fender 11A can be easily determined by establishing the radio communication with the IC tags 2 using the communication unit 7. This facilitates a more detailed understanding of the state of the fender 11A (such as the presence of abnormalities) based on changes in the internal pressure and temperature of the fender 11A over time.

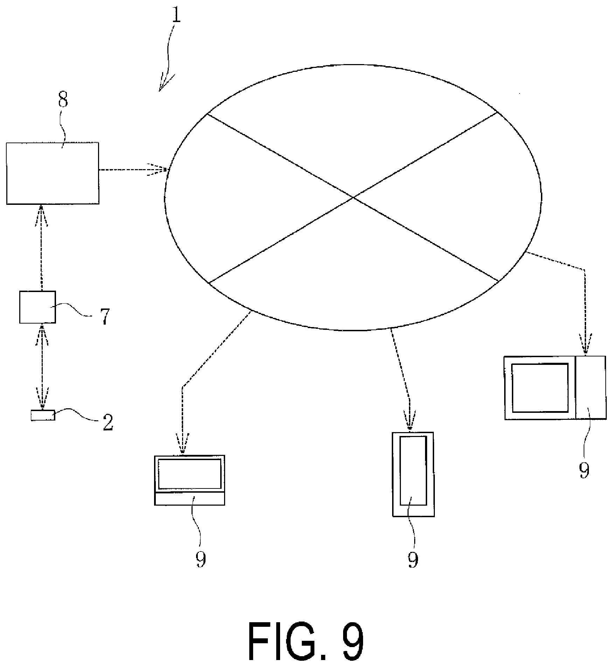

As illustrated in FIG. 9, the management system 1 may be configured such that the computation device 8 is connected to desired terminal devices 9 via a communication network such as the Internet. For example, desired information (such as installation state, internal pressure data, and internal temperature data) is transmitted from the computation device 8 to the terminal devices 9 of relevant parties, such as the management office of an operating company (user) of the fender 11A, a sales company or manufacturing company of the fender 11A, which are located remotely from the place of use of the fender 11A. This configuration allows relevant personnel operating these terminal devices 9 to monitor and manage the state of the fender 11A while located remotely from the place of use of the fender 11A.

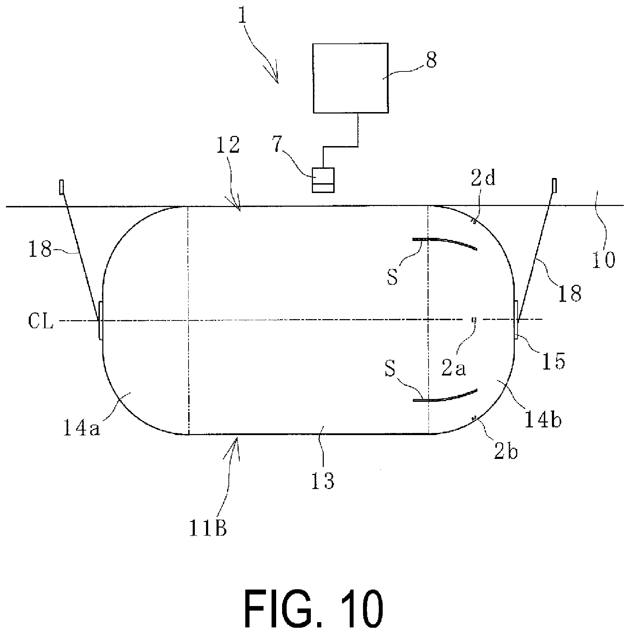

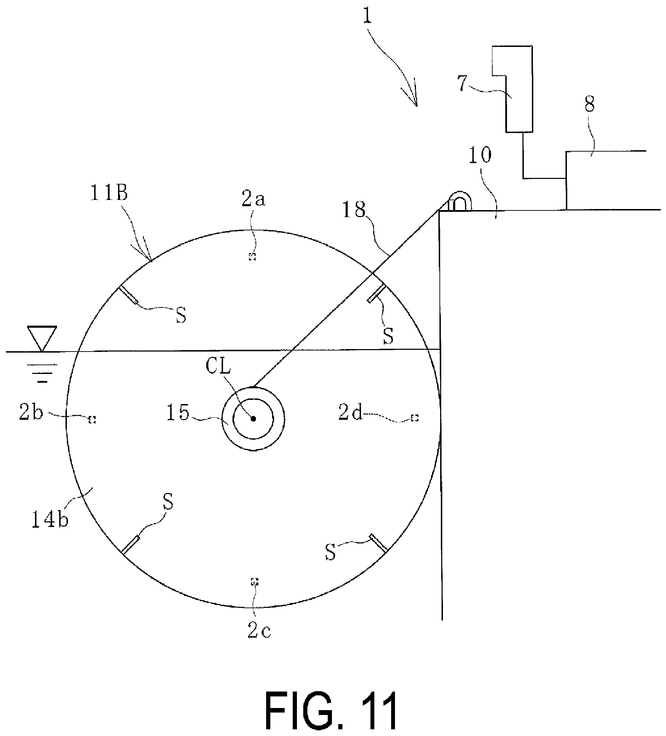

As illustrated in FIGS. 10 and 11, the management system 1 can also be applied to a so-called horizontal pneumatic fender 11B (hereinafter referred to as a fender 11B). The fender 11B is installed against the quay wall 10 sideways, with the one bowl-shaped end portion 14a on the left side and the other bowl-shaped end portion 14b on the right side. The fixing rope 18, one end of which is secured to the quay wall 10, is connected to the mouthpiece portion 15 located at both bowl-shaped end portions 14a and 14b. The fender 11B is installed at the quay wall 10 with its rotation around the cylinder center line CL being regulated.

On the right-side bowl-shaped end portion 14b, four IC tags 2 are disposed at equal intervals (90 degrees) in the circumferential direction around the cylinder center line CL. Four indicators S extending in the lateral direction are attached to the right-side bowl-shaped end portion 14b at positions in the circumferential direction at equal intervals (90 degrees) around the cylinder center line CL. Thus, one IC tag 2 is disposed between adjacent indicators S in the circumferential direction.

In this embodiment, in a side view illustrated in FIG. 11, the fender body 12 is disposed such that the side on which the IC tag 2d of the fender body 12 is disposed is in contact with the quay wall 10. The side of the fender body 12 on which the IC tag 2b facing the IC tag 2d is disposed comes into contact with the watercraft 19.

When applying the management system 1 to this fender 11B, the same management operations as described above for the fender 11A are performed. When applying the management system 1 to this fender 11B, various arrangements described for the case of the fender 11A can also be implemented.

### Reference Signs List

1 Management system
2 IC tag
3 IC chip
4 Antenna unit
5 Substrate
5a Insulating layer
6a Pressure sensor
6b Temperature sensor
7 Communication unit
7a Radio wave transmission unit
7b Radio wave reception unit
8 Computation device
9 Terminal device
10 Quay wall
11A, 11B Pneumatic fender
12 Fender body
13 Body portion
14a, 14b Bowl-shaped end portion
15 Mouthpiece portion
16 Weight
17 Chain
18 Fixing rope
19 Watercraft
W Ballast water
A Identification information
D1, D2 Detection data
S Indicator

## Claims

1. A pneumatic fender management system in which a pneumatic fender has a fender body to which bowl-shaped end portions are connected adjacent to both sides of a cylindrical body portion in a cylinder axial direction, rotation of the pneumatic fender around a cylinder center line is regulated, and a state of the pneumatic fender installed at a place of use is determined, the pneumatic fender management system comprising:
passive IC tags installed facing each other at intervals in a circumferential direction of the fender body;
a communication unit disposed outside the pneumatic fender and configured to establish wireless communication with each of the passive IC tags; and
a computation device;
identification information of each of the passive IC tags, a circumferential installation position of each of the passive IC tags in the fender body, and a circumferential placement position of each of the passive IC tags at the place of use being defined as preliminary information, and
based on the identification information of at least one of the passive IC tags acquired by the communication unit using wireless communication, the circumferential placement position of the at least one passive IC tag at the place of use when the identification information is acquired, and the preliminary information, a position fixation period of the fender body in the circumferential direction at the place of use being specified by a computation device.

2. The pneumatic fender management system according to claim 1, further comprising
a pressure sensor configured to detect an air pressure of the fender body, wherein
detection data from the pressure sensor is acquired by the communication unit using the wireless communication and is input to the computation device.

3. The pneumatic fender management system according to claim 1 or 2, wherein the pneumatic fender is a vertical pneumatic fender that has a weight connected to one of the bowl-shaped end portions and is installed at the place of use, the one of the bowl-shaped end portions being a lower end portion of the fender body and the other of the bowl-shaped end portions being an upper end portion of the fender body.

4. The pneumatic fender management system according to claim 3, wherein each of the passive IC tags is disposed at the other of the bowl-shaped end portions.

5. The pneumatic fender management system according to claim 4, wherein an indicator indicating a circumferential position at which each of the IC passive tags is disposed is attached to an outer surface of the other of the bowl-shaped end portions.

6. A pneumatic fender management method in which a pneumatic fender has a fender body to which bowl-shaped end portions are connected adjacent to both sides of a cylindrical body portion in a cylinder axial direction, rotation of the pneumatic fender around a cylinder center line is regulated, and a state of the pneumatic fender installed at a place of use is determined, the pneumatic fender management method comprising:
installing passive IC tags facing each other at intervals in a circumferential direction of the fender body;
installing, outside the pneumatic fender, a communication unit configured to establish wireless communication with each of the passive IC tags;
defining, as preliminary information, identification information of each of the passive IC tags, a circumferential installation position of each of the passive IC tags in the fender body, and a circumferential placement position of each of the passive IC tags at the place of use; and
based on the identification information of at least one of the passive IC tags acquired by the communication unit using wireless communication, the circumferential placement position of the at least one passive IC tag at the place of use when the identification information is acquired, and the preliminary information, specifying, by a computation device, a position fixation period of the fender body in the circumferential direction at the place of use.
